# EUROPEAN PATENT SPECIFICATION

(11) **EP 3 517 464 B1**
(45) Date of publication and mention of the grant of the patent: **25.11.2026**
(21) Application number: 19153083.1
(22) Date of filing: 22.01.2019
(51) Int. Cl.: B65G 43/06, F26B 15/12, F27B 9/24, F27B 9/40, F27D 21/04

(54) **SYSTEM FOR DETECTING THE BREAKAGE OF ROLLERS OF CONTINUOUS ROLLER CONVEYORS, PARTICULARLY FOR KILNS AND DRYERS FOR THE CERAMICS INDUSTRY**
SYSTEM ZUR DETEKTION DES BRUCHS VON ROLLEN VON ENDLOSROLLENBAHNEN, INSBESONDERE FÜR ÖFEN UND TROCKNER FÜR DIE KERAMIKINDUSTRIE
SYSTÈME DE DÉTECTION DE RUPTURE DE ROULEAUX DE CONVOYEURS À ROULEAUX CONTINUS, NOTAMMENT POUR FOURS ET SÉCHOIRS POUR L'INDUSTRIE DE LA CÉRAMIQUE

(30) Priority: 24.01.2018 IT 201800001709
(43) Date of publication of application: 31.07.2019
(73) Proprietor: Bastardi, Giuseppe, 41014 Castelvetro di Modena MO (IT)
(72) Inventor: Bastardi, Giuseppe, 41014 Castelvetro di Modena MO (IT)
(74) Representative: Modiano, Micaela Nadia

(56) References cited:
- EP-A1- 1 747 416
- EP-B1- 1 747 416
- CN-A- 102 435 067
- CN-A- 102 538 498
- DE-U1- 202011 003 708
- FR-A1- 2 863 259
- JP-A- H0 436 588
- JP-A- H0 989 461

## Description

The present invention relates to a system for detecting the breakage of rollers of continuous roller conveyors, particularly for kilns and dryers for the ceramics industry.

Continuous roller conveyors are known which are substantially constituted by a supporting structure for motorized roller conveyors in which a plurality of rollers, arranged mutually adjacent and parallel and rotationally actuated about the longitudinal axes thereof, act as a resting and conveyance surface for articles of various type along a transfer direction that is transverse to the extension of the rollers proper. There are applications for such continuous conveyors in many types of industrial plants.

With particular, but not exclusive, reference to the ceramics sector, for example, such continuous roller conveyors are used inside kilns and dryers to transfer semi-finished articles during the heat treatment.

Ceramic kilns, for example, have a firing chamber with temperature-controlled zones that are of considerable length, inside which there is a roller conveyance surface for conveying the articles from the entrance to the exit. Each roller is arranged horizontally and with an arrangement transverse to the longitudinal extension of the firing chamber, with the mutually opposite ends protruding from the side walls of the chamber. At one side of the firing chamber, the ends of the rollers are supported so that they can rotate freely by adapted bearings, while on the opposite side the ends of the rollers are associated with a transmission system in order to turn them.

In ceramic dryers, there is a structure of the type described above, but generally there are multiple superimposed roller conveyance surfaces.

Owing to the high working temperatures and the weight of the articles transported, it can happen that the conveyor rollers become damaged or even break, causing a pileup of articles on the conveyance surface and the consequent deformation or breakage thereof.

In these cases it is essential to intervene promptly in order to stop the drive unit of the rollers and replace the damaged ones, so as to limit the formation of discards.

For this reason there are usually monitoring systems installed inside the kiln or dryer which, by way of adapted sensors, detect the pileup of material. For example photocells can be arranged above the roller surface, which detect the presence of a light beam and are connected to an alerting system which is activated if the photocells no longer detect the light signal as a consequence of the formation of a pileup of material which interrupts its passage.

These detection systems are not devoid of drawbacks, among which is the fact that the alert is activated only after a certain layer of material has built up on the conveyance surface and, therefore, when a certain number of articles in transit have already been damaged.

Furthermore, such detection systems risk not reporting a small displacement or the breakage of a single roller which, on its own, may not cause a pileup of material, but still causes the deformation of the articles in transit owing to inadequate support.

In order to overcome these drawbacks, an object detection system has been developed and is the subject matter of Italian patent no. 1,341,400, in which a conductor wire is kept tensioned above the idle ends of the rollers, to which an electrical potential is applied. Such conductor wire is supported by a plurality of supports interposed between the rollers which have a base for supporting the cable which is made of electrically insulating material, above which is arranged a metallic plate connected to earth.

Under normal operating conditions of the roller conveyance surface, the conductor wire does not touch the metallic plates of the supports, so that it is insulated and electric current does not pass through it.

In the event of the breakage of a roller, the corresponding idle end will incline and touch the conductor wire and lift it, resulting in contact with the metallic plate of at least one support. In these conditions the metallic cable, through the metallic plate, is connected to earth and, owing to the potential difference, an electric current through it is generated, which is detected by a current detector which activates the malfunction alert.

This conventional system makes it possible to obtain a rapid alert of any breakages of even a single roller of the conveyance surface and makes it possible, therefore, to immediately suspend the drive unit of the rollers, as a consequence containing the formation of defective articles that will be discarded.

However, this conventional system implies the need to connect all the supports to earth and to constantly apply an electrical potential to the conductor wire, with consequent energy consumption.

Furthermore, with this conventional system, as a consequence of the alert, the operators of the plant have to visually inspect the entire roller conveyor in order to locate the breakage and replace the corresponding roller.

Considering the considerable extension of the roller conveyor surfaces, longitudinally and/or vertically, such inspection step requires a certain time to carry out and can be inconvenient for the operators.

The document CN102538498B discloses device for detecting the position of a broken roller in a kiln furnace comprising a cable adapted to be arranged in an upward region proximate to, but not in contact with a free end of the rollers of the kiln conveyance surface and a "U" shaped steel frame forming a switch of the electrical circuit of the device. In particular, the document CN102538498B discloses a system for detecting the breakage of rollers of continuous roller conveyors according to the preamble of claim 1.

The aim of the present invention is, therefore, to eliminate the above mentioned drawbacks of the known art by devising a system for detecting the breakage of rollers of continuous roller conveyors, particularly for kilns and dryers for the ceramics industry, which makes it possible to simplify its installation and reduce the consumption of electricity necessary for its operation.

Within this aim, an object of the present invention is to be able to automatically determine the zone where the breakage occurred, so as to speed up and make easier the operations to replace damaged rollers.

Another object of the present invention is to enable a prompt detection of the breakage or of the vertical displacement of even a single roller, so as to enable the immediate interruption of the drive unit of the rollers, in order to limit the production of defective articles to be rejected.

Another object of the present invention is to be able to install it on roller conveyors be they of new construction or already installed in place.

Another object of the present invention is to be able to adapt to the configuration of the roller conveyors, independently of the longitudinal extension thereof or of the number of superimposed surfaces involved.

Last but not least, another object of the present invention is to provide a simple structure which is easy and practical to implement, safe in use and effective in operation, and at low cost.

This aim and these and other objects which will becom better apparent hereinafter are achieved by the present system for detecting the breakage of rollers of continuous roller conveyors, particularly for kilns and dryers for the ceramics industry according to claim 1, optionally provided with one or more of the characteristics recited in the dependent claims.

Further characteristics and advantages of the present invention will become better apparent from the detailed description of two preferred, but not exclusive, embodiments of a system for detecting the breakage of rollers of continuous roller conveyors, particularly for kilns and dryers for the ceramics industry, which are illustrated for the purposes of non-limiting example in the accompanying drawings wherein:

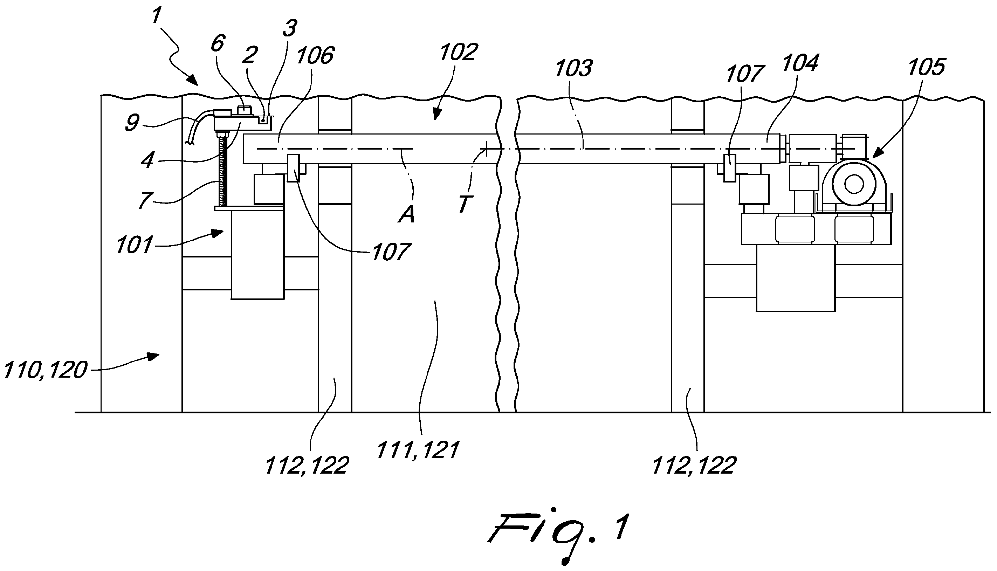

Figure 1 is a schematic front elevation view of a system for detecting the breakage of rollers of continuous roller conveyors, according to the invention, applied to a roller conveyance surface of a ceramic dryer or kiln;
Figure 2 is an enlarged-scale view of a portion of Figure 1 corresponding to the system according to the invention;

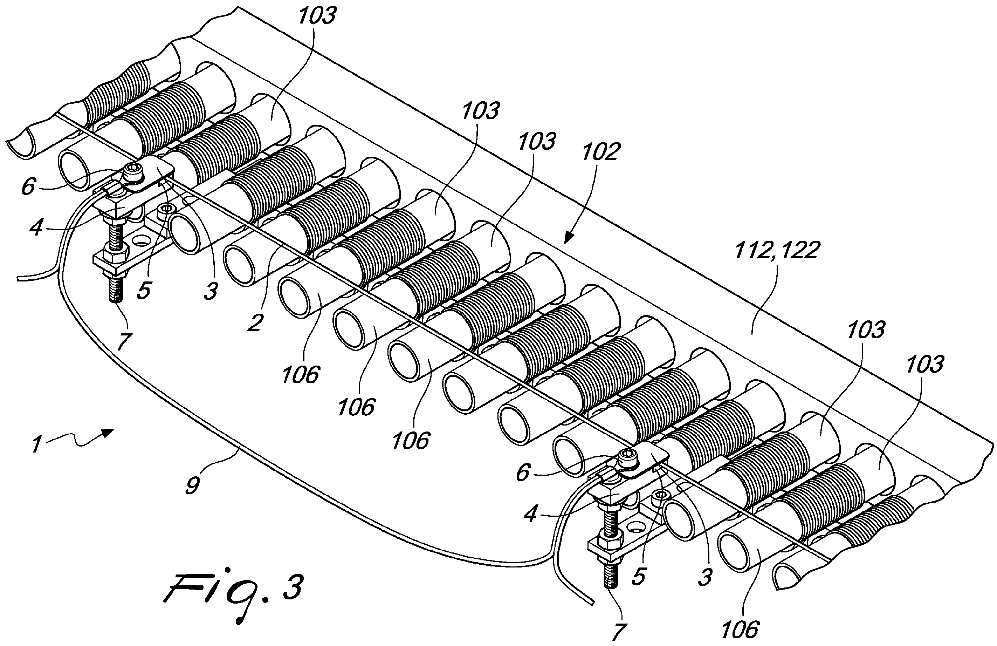

Figure 3 is a partial perspective view of a system according to the invention applied to a roller conveyance surface of a ceramic dryer or kiln;

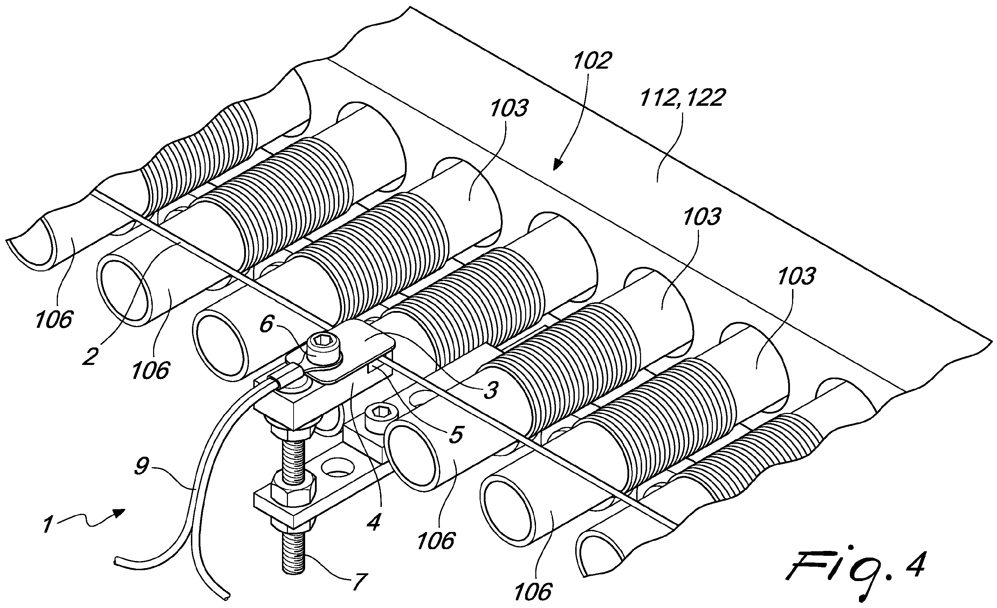

Figure 4 is an enlarged-scale view of a portion of Figure 3;

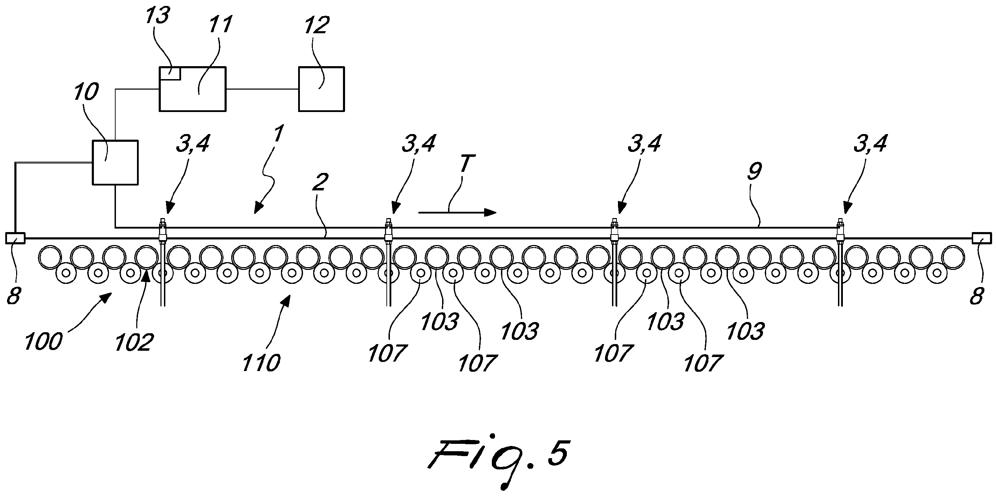

Figure 5 is a schematic diagram of a system according to the invention applied to the roller conveyance surface of a ceramic kiln;

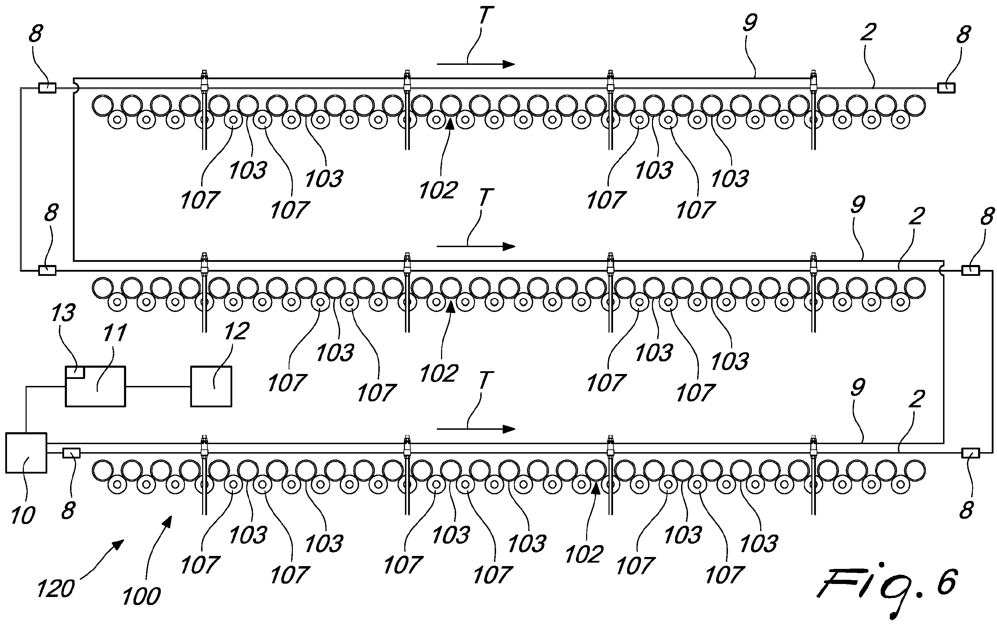

Figure 6 is a schematic diagram of a system according to the invention applied to the roller conveyance surfaces of a ceramic dryer.

With reference to the figures, the reference numeral 1 generally designates a system for detecting the breakage of rollers of continuous roller conveyors, particularly for kilns and dryers for the ceramics industry.

The system 1 is intended to be applied to continuous roller conveyors 100 of the type comprising a structure 101 for supporting at least one conveyance surface 102 which comprises a plurality of rollers 103 that are arranged so that their corresponding longitudinal axes A are substantially parallel and juxtaposed along a transfer direction T that is substantially transverse to those longitudinal axes A.

Generally the conveyance surface 102 has a horizontal arrangement and the longitudinal axes A and the transfer direction T are horizontal and are mutually perpendicular.

Each roller 103 has a first end 104 associated with means for rotational actuation 105 about its own longitudinal axis A and a second end 106, arranged opposite the first end, which is supported so that it can rotate freely by bearings 107.

The means for actuation 105 can be, for example, of the type of an electric motor coupled to belt, chain or pinion transmission means in order to turn the rollers 103.

In particular, the system 1 is adapted for application to continuous conveyors 100 present in kilns 110 or dryers 120 for the ceramics industry.

In this case the kiln 110 or the dryer 120 have a longitudinally extended chamber 111 or 121 for the heat treatment of the articles, which is passed through by the continuous conveyor 100 and which is delimited laterally by a pair of mutually opposite walls 112 or 122 from which the ends 104 and 105 of the rollers 103 protrude.

According to the invention, the system 1 comprises a main cable 2 which in use is positioned tensioned above the second ends 106 of the rollers 103, but not in contact with them.

The main cable 2 is made of an electrically conducting material and has a characteristic value V_{c} of electrical resistance per unit of length. The main cable 2 therefore has a maximum value Vₘₐₓ of electric resistance that corresponds to its total length Lₜₒₜ which is calculated as follows: ${V}_{max} = {L}_{tot} ⋅ {V}_{c} .$

The main cable 2, for example, can be constituted by a wire made with an alloy of iron, chromium and aluminum, called Kanthal A-1^{™}, which has an electric resistance value per linear meter of 0.2-1 Ω/m, which is also variable as a function of the diameter of the wire.

The system 1 further comprises a plurality of contact elements 3 made of electrically conducting material, which are distributed along the main cable 2, above it and not in contact with it.

Preferably, the contact elements 3 are distributed along the main cable 2 with constant spacing, there being comprised between two contiguous contact elements 3 a predefined number of rollers 103 as a function of the distance comprised between them.

The contact elements 3 can be made, for example, with plates made of metallic material.

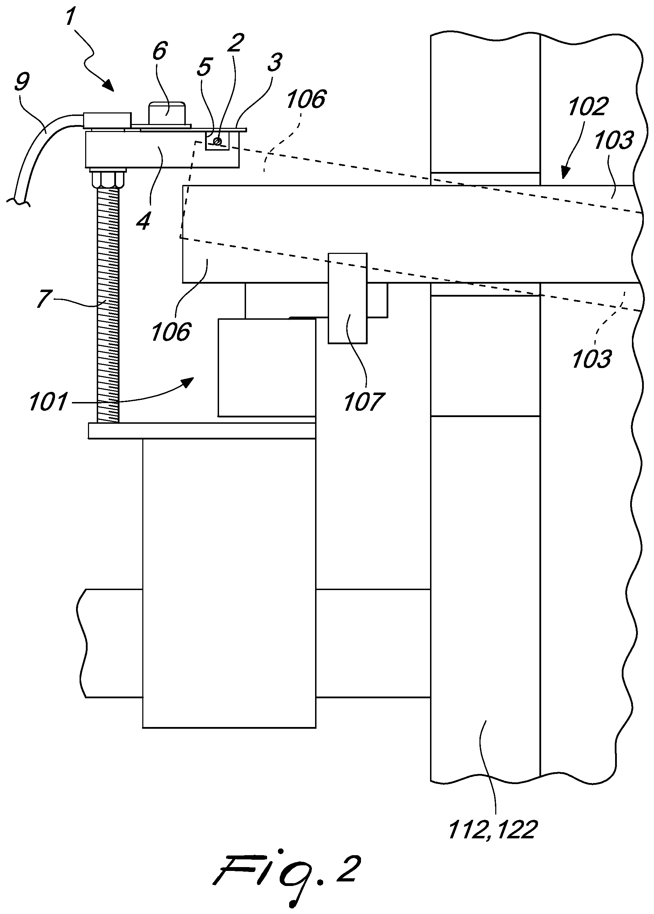

As a consequence of the breakage of a roller 103, the corresponding second end 106, by inclining upward, interferes with the conductor wire 2 until it is brought into contact with one of the contact elements 3 adjacent thereto (Figure 2).

Preferably the system 1 has a plurality of supports 4 made of electrically insulating material, each one of which is associated with a respective contact element 3 and is connected to the supporting structure 101 of the continuous conveyor 100.

Each support 4 can be made for example from a prismatic body made of wood, Bakelite or other electrically insulating material, which has a slot 5 facing its upper face, in which the main cable 2 is inserted so that it passes through. The depth of the slot 5 is at least equal to the transverse dimension (diameter) of the main cable 2 which rests on its end wall and, under normal operating conditions, does not touch the corresponding contact element 3.

The corresponding contact element 3 is arranged substantially tangent to the upper face of the support 4 so as to cover the slot 5 and is connected thereto by way of a screw 6.

During the normal operation the main cable 2 remains accommodated inside the slots 5 of the various supports 4 and does not interact with the main cable 2.

In the event of breakage of a roller 103, the main cable 2 is brought into contact with one of the contact elements 3.

Each support 4 is connected to the supporting structure 101 by way of separate connection elements 7 so that the corresponding contact element 3 is isolated from the structure.

Furthermore, at the ends of the main cable 2 there are couplings 8 made of electrically insulating material to which those ends are connected by the interposition of elastic traction springs (not shown), which make it possible to keep the main cable 2 tensioned, but with a certain degree of yield, in order to permit the flexion thereof in the event of breakage of a roller 103.

The system 1 further comprises a secondary cable 9 made of electrically conducting material, which is electrically connected in series to the contact elements 3, and means for detecting 10 a value of electric resistance Vᵣ referred to the main cable 2, which are electrically coupled to the main cable proper and to the secondary cable 9.

In the event of breakage of a roller 103, the value Vᵣ detected by the means for detecting 10 is lower than the maximum value Vₘₐₓ because it corresponds to the length Lₜ of the portion of main cable 2 comprised between those means for detecting and the contact element 3 on which that cable abuts, and not to its total length Lₜₒₜ.

The system 1 finally comprises processing means 11 which are adapted to compare the detected value Vᵣ with the maximum value Vₘₐₓ and, if a difference is detected, to deactivate the means for rotational actuation 105 so as to arrest the advancement of the continuous conveyor 100 and contain, or even eliminate, the formation of discards in the event of breakage of a roller 103.

The processing means 11 are of the type of a conventional electronic board programmed/programmable to execute the procedures described, which is interfaced with an additional electronic board for managing the means for actuation 105, which is usually comprised in the continuous conveyor 100, according to methods known to the person skilled in the art.

The system 1 can further comprise means for signaling 12 a malfunction of the visual and/or acoustic type, which are activated by the processing means 11 if the value detected Vᵣ is less than the maximum value Vₘₐₓ.

According to the invention, the processing means 11 comprise memory means 12 which contain the characteristic value V_{c} of the main cable 2 and are adapted, if the detected value Vᵣ is lower than the maximum value Vₘₐₓ, to determine the length Lₜ of the portion of main cable 2 that corresponds to the detected value Vᵣ by following a ratio as follows: ${L}_{t} = \frac{{L}_{tot} ⋅ {V}_{r}}{{V}_{max}} .$

According to the invention, the memory means 13 also contain first dimensional data relating to the distribution of the contact elements 3 along the main cable 2 and the processing means 11 are adapted to determine the contact element 3 on which the main cable 2 has abutted following the breakage of a roller 103 on the basis of such first data and of the length Lₜ of the portion of main cable calculated on the basis of the detected value Vᵣ.

Such first data contain for example the spacing with which the contact elements 3 are distributed or the distance between them.

In this manner the system 1 makes it possible to identify the contact element 3 proximate to which the breakage of a roller 103 has occurred.

In an even more improved version, the memory means 13 also contain second dimensional data relating to the shape structure of the continuous conveyor 100 and the processing means 11 are adapted to determine the position of the contact element 3 on which the main cable 2 has abutted as a consequence of the breakage of a roller 103 with respect to the continuous conveyor 100 on the basis of such second data.

In this manner the system 1 directly provides the information about the position of the contact element 3 proximate to which the breakage of a roller 103 has occurred with respect to the shape structure of the continuous conveyor 100, this minimizing the intervention times to replace the compromised roller 103.

If the continuous conveyor 100 has a single conveyance surface 102, as in the case of a kiln 110, then the second data comprise for example information about the total length of that surface.

If the continuous conveyor 100 has two or more superimposed conveyance surfaces 102, as in the case of a dryer 120, then the second data comprise for example information about the total length of each surface and about the distance between them.

Operation of the present invention is the following.

During normal operation the means for detecting 10 continue measuring a detected value Vᵣ which is equal to the maximum value Vₘₐₓ, and therefore the processing means do not intervene.

In the event of the breakage of a roller 103, the upward inclination of the corresponding second end 106 causes a lifting of the main cable 2 until it abuts against one of the contact elements 3 adjacent thereto.

In this condition the means for detecting 10 measure a detected value Vᵣ which is lower than the maximum value Vₘₐₓ, because the portion of main cable 2 downstream of the contact element 3 is earthed, and only the electric resistance of the portion of main cable 2 comprised between the means for detecting 10 and the contact element proper is measured.

The processing means 11 intervene, therefore, in order to stop the means for actuation 105 and activate the means for signaling 12, if applicable.

Furthermore the processing means 11, if adequately adapted as indicated above, can be activated in order to determine the length Lₜ of the portion of main cable 2 corresponding to the detected value Vᵣ and, as a consequence, the contact element 3 proximate to which the breakage of the roller 103 has occurred i.e. the position of such contact element 3 along the continuous conveyor 100.

It should be noted that the system 1 can be installed directly during the construction of a new continuous conveyor using rollers, or of a machine that comprises a continuous conveyor using rollers, or it can be applied subsequently to a conveyor or to a machine already in place without requiring particular structural modifications.

In practice it has been found that the invention as described achieves the intended aim and objects and, in particular, attention is drawn to the fact that the system according to the invention makes it possible to perform a monitoring and a detection of any breakages with a structure that is extremely simple and has low energy consumption.

Furthermore the system according to the invention makes it possible to execute further processing geared to determining the position where the breakage occurred without any structural complication, thus minimizing the intervention times and facilitating the operations required of the plant operators.

The invention, thus conceived, is susceptible of numerous modifications and variations, all of which are within the scope of the appended claims.

Moreover, all the details may be substituted by other, technically equivalent elements.

In practice the materials employed, as well as the contingent dimensions and shapes, may be any according to requirements without for this reason departing from the scope of protection claimed herein.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A system (1) for detecting the breakage of rollers of continuous roller conveyors, particularly for kilns and dryers for the ceramics industry, the continuous conveyor (100) being of the type that comprises a structure (101) for supporting at least one roller conveyance surface (102) which comprises a plurality of rollers (103) that are arranged so that their corresponding longitudinal axes (A) are substantially parallel and juxtaposed along a transfer direction (T) that is substantially transverse to the longitudinal axes (A) of said rollers, each roller (103) having a first end (104) associated with means for rotational actuation (105) about its own longitudinal axis (A) and a second end (106), arranged opposite the first end, which is supported so that it can rotate freely,
a main cable (2) adapted to be arranged in an upper region proximate to, but not in contact with, the idle second ends (106) of the rollers (103) of said at least one conveyance surface (102), said main cable (2) being made of an electrically conducting material and having a characteristic value (V_{c}) of electrical resistance per unit of length, the main cable (2) therefore having a maximum value (Vₘₐₓ) of electrical resistance that corresponds to its total length (Lₜₒₜ),
a plurality of contact elements (3) made of electrically conducting material, which are distributed along said main cable (2) and are arranged above it and not in contact with it, following the breakage of a roller (103) the inclination of the corresponding second end (106) being adapted to interfere with the main cable (2) until it is brought into contact with at least one of the contact elements (3),
**characterized in that** it comprises:
a secondary cable (9) made of electrically conducting material which is electrically connected in series to said plurality of contact elements (3),
means for detecting (10) a value (Vᵣ) of electrical resistance referred to said main cable (2), which are electrically connected to the main and secondary cables (2, 9), in the event of breakage of a roller (103) the value (Vᵣ) detected by the means for detecting (10) being lower than the maximum value (Vₘₐₓ) and corresponding to a length (Lₜ) of a portion of main cable (2) comprised between said means for detecting and the contact element (3) on which said cable abuts, and
processing means (11) which are adapted to compare said detected value (Vᵣ) with said maximum value (Vₘₐₓ) and, if a difference is detected, to deactivate said means for rotational actuation (105) so as to arrest the advancement of the continuous conveyor (100) and contain, or even eliminate, the formation of discards in the event of breakage of a roller (103), said processing means (10) comprising memory means (13) which contain said characteristic value (V_{c}) of the main cable (2) and are adapted, if said detected value (Vᵣ) is lower than said maximum value (Vₘₐₓ), to determine the length (Lₜ) of the portion of main cable (2) that corresponds to said detected value (Vᵣ) on the basis of said characteristic value (V_{c}), said memory means (13) also containing first dimensional data relating to the distribution of said contact elements (3) along said main cable (2) and **in that** said processing means (11) are adapted to determine the contact element (3) on which said main cable (2) has abutted following the breakage of a roller (103) on the basis of said first data and of the length (Lₜ) of said portion of main cable.

2. The system (1) according to claim 1, **characterized in that** said memory means (13) also contain second dimensional data relating to the shape structure of said continuous conveyor (100) and **in that** said processing means (11) are adapted to determine the position of the contact element (3) on which said main cable (2) has abutted as a consequence of the breakage of a roller (103) with respect to said continuous conveyor (100) on the basis of said second data.

3. The system (1) according to one or more of the preceding claims, **characterized in that** it comprises means for signaling (12) a malfunction which are functionally associated with said processing means (11) in order to be activated when said detected value (Vᵣ) is lower than said maximum value (Vₘₐₓ).

4. The system (1) according to one or more of the preceding claims, **characterized in that** each one of said contact elements (3) comprises a metallic plate.

5. The system (1) according to one or more of the preceding claims, **characterized in that** it comprises a plurality of supports (4) made of insulating material, each one of which is associated with a respective contact element (3) and can be associated with the supporting structure (101) of said continuous conveyor (100).

6. A ceramic kiln (110) comprising a continuous conveyor (100) using rollers (103), **characterized in that** it comprises a system (1) according to one or more of claims 1-5.

7. A ceramic dryer (120) comprising a continuous conveyor (100) using rollers (103), **characterized in that** it comprises a system (1) according to one or more of claims 1-5.

## Patentansprüche

1. Ein System (1) zur Detektion des Bruchs von Rollen von Endlosrollenbahnen, insbesondere für Öfen und Trockner für die Keramikindustrie, wobei die Endlosrollenbahn (100) von dem Typ ist, der eine Struktur (101) zum Tragen mindestens einer Rollenbahnoberfläche (102) umfasst, welche eine Vielzahl von Rollen (103) umfasst, die so angeordnet sind, dass ihre entsprechenden Längsachsen (A) im Wesentlichen parallel und entlang einer Transferrichtung (T) nebeneinander angeordnet sind, die im Wesentlichen quer zu den Längsachsen (A) der Rollen ist; wobei jede Rolle (103) ein erstes Ende (104) hat, das mit Mitteln (105) für den Drehantrieb um ihre eigene Längsachse (A) verbunden ist, und ein zweites Ende (106), dem ersten Ende gegenüber angeordnet, welches so gelagert ist, dass es sich frei drehen kann;
ein Hauptkabel (2), ausgebildet, um in einem oberen Bereich in der Nähe von, aber nicht im Kontakt mit den freien zweiten Enden (106) der Rollen (103) der mindestens einen Rollenbahnoberfläche (102) angeordnet zu werden; wobei das Hauptkabel (2) aus einem elektrisch leitenden Material besteht und einen Kennwert (V_{c}) des elektrischen Widerstands je Längeneinheit hat, wobei das Hauptkabel (2) folglich einen Maximalwert (Vₘₐₓ) des elektrischen Widerstands hat, der seiner Gesamtlänge (Lₜₒₜ) entspricht;
eine Vielzahl von Kontaktelementen (3) aus elektrisch leitendem Material, die entlang dem Hauptkabel (2) verteilt und über ihm und nicht in Kontakt mit ihm angeordnet sind, wobei nach dem Bruch einer Rolle (103) die Neigung des entsprechenden zweiten Endes (106) ausgebildet ist, um das Hauptkabel (2) zu behindern, bis es in Kontakt mit mindestens einem der Kontaktelemente (3) gebracht wird; **dadurch gekennzeichnet, dass** es Folgendes umfasst:
ein Sekundärkabel (9) aus elektrisch leitendem Material, welches in Serie elektrisch mit der Vielzahl von Kontaktelementen (3) verbunden ist;
Mittel (10) zur Erfassung eines Werts (Vᵣ) des elektrischen Widerstands, bezogen auf das Hauptkabel (2), die elektrisch mit dem Hauptkabel und dem Sekundärkabel (2, 9) verbunden sind, wobei bei Bruch einer Rolle (103) der Wert (Vᵣ), der von den Erfassungsmitteln (10) erfasst wird, niedriger ist als der Maximalwert (Vₘₐₓ) und einer Länge (Lₜ) eines Abschnitts des Hauptkabels (2) entspricht, der zwischen den Erfassungsmitteln und dem Kontaktelement (3) liegt, an welchem das Kabel anliegt, und
Verarbeitungsmittel (11), die ausgebildet sind, um den erfassten Wert (Vᵣ) mit dem Maximalwert (Vₘₐₓ) zu vergleichen und, falls eine Differenz erkannt wird, die Mittel (105) zur Drehbetätigung zu deaktivieren, um den Vorschub der Endlosrollenbahn (100) anzuhalten und das Entstehen von Abfällen bei Bruch einer Rolle (103) zu reduzieren oder sogar zu verhindern; wobei die Verarbeitungsmittel (10) Speichermittel (13) umfassen, welche den Kennwert (V_{c}) des Hauptkabels (2) enthalten und ausgebildet sind, um, wenn der erfasste Wert (Vᵣ) unter dem Maximalwert (Vₘₐₓ) liegt, anhand des Kennwerts (V_{c}) die Länge (Lₜ) des Abschnitts des Hauptkabels (2) zu bestimmen, die dem erfassten Wert (Vᵣ) entspricht; wobei die Speichermittel (13) außerdem erste Abmessungsdaten enthalten, die sich auf die Verteilung der Kontaktelemente (3) entlang dem Hauptkabel (2) beziehen; und dadurch, dass die Verarbeitungsmittel (11) ausgebildet sind, um das Kontaktelement (3), an dem das Hauptkabel (2) nach dem Bruch einer Rolle (103) zum Anliegen gekommen ist, anhand der ersten Daten und der Länge (Lₜ) des Abschnitts des Hauptkabels zu bestimmen.

2. Das System (1) gemäß Anspruch 1, **dadurch gekennzeichnet, dass** die Speichermittel (13) außerdem zweite Abmessungsdaten enthalten, die die Form der Endlosrollenbahn (100) betreffen; und dadurch, dass die Verarbeitungsmittel (11) ausgebildet sind, um die Position des Kontaktelements (3), an welchem das Hauptkabel (2) infolge des Bruchs einer Rolle (103) zum Anliegen gekommen ist, mit Bezug auf die Endlosrollenbahn (100) anhand der zweiten Daten zu bestimmen.

3. Das System (1) gemäß einem oder mehreren der obigen Ansprüche, **dadurch gekennzeichnet, dass** es Mittel (12) zum Signalisieren einer Störung umfasst, die funktionell mit den Verarbeitungsmitteln (11) verknüpft sind, um aktiviert zu werden, wenn der erfasste Wert (Vᵣ) niedriger ist als der Maximalwert (Vₘₐₓ).

4. Das System (1) gemäß einem oder mehreren der obigen Ansprüche, **dadurch gekennzeichnet, dass** jedes der Kontaktelemente (3) eine Metallplatte umfasst.

5. Das System (1) gemäß einem oder mehreren der obigen Ansprüche, **dadurch gekennzeichnet, dass** es eine Vielzahl von Trägern (4) aus Isoliermaterial umfasst, die jeweils mit einem dazugehörigen Kontaktelement (3) verbunden sind und mit der tragenden Struktur (101) der Endlosrollenbahn (100) verbunden sein können.

6. Ein Keramikofen (110), der eine Endlosbahn (100) umfasst, die Rollen (103) verwendet, **dadurch gekennzeichnet, dass** er ein System (1) gemäß einem oder mehreren der Ansprüche 1-5 umfasst.

7. Ein Keramiktrockner (120), der eine Endlosbahn (100) umfasst, die Rollen (103) verwendet, **dadurch gekennzeichnet, dass** er ein System (1) gemäß einem oder mehreren der Ansprüche 1-5 umfasst.

## Revendications

1. Système (1) destiné à détecter la rupture de rouleaux de convoyeurs à rouleaux continus, en particulier pour les fours et les séchoirs de l'industrie céramique, le convoyeur en continu (100) étant du type comprenant une structure (101) destinée à supporter au moins une surface de transport à rouleaux (102) qui comprend une pluralité de rouleaux (103) disposés de telle sorte que leurs axes longitudinaux respectifs (A) soient sensiblement parallèles et juxtaposés le long d'une direction de transfert (T) sensiblement transversale aux axes longitudinaux (A) desdits rouleaux, chaque rouleau (103) présentant une première extrémité (104) associée à des moyens d'entraînement en rotation (105) autour de son propre axe longitudinal (A) et une seconde extrémité (106), disposée à l'opposé de la première extrémité, qui est supportée de manière à pouvoir tourner librement,
un câble principal (2) adapté pour être disposé dans une région supérieure à proximité de, mais sans contact avec, les secondes extrémités libres (106) des rouleaux (103) de ladite au moins une surface de transport (102), ledit câble principal (2) étant constitué d'un matériau électriquement conducteur et présentant une valeur caractéristique (V_{c}) de résistance électrique par unité de longueur, le câble principal (2) présentant donc une valeur maximale (Vₘₐₓ) de résistance électrique qui correspond à sa longueur totale (Lₜₒₜ),
une pluralité d'éléments de contact (3) constitués d'un matériau électriquement conducteur, qui sont répartis le long dudit câble principal (2) et sont disposés au-dessus de celui-ci sans être en contact avec lui, l'inclinaison de la deuxième extrémité correspondante (106) étant adaptée, à la suite de la rupture d'un rouleau (103), pour entrer en interférence avec le câble principal (2) jusqu'à ce qu' qu'il soit mis en contact avec au moins l'un des éléments de contact (3), **caractérisé en ce qu'**il comprend :
un câble secondaire (9) en matériau électriquement conducteur, qui est relié électriquement en série à ladite pluralité d'éléments de contact (3),
des moyens de détection (10) d'une valeur (Vᵣ) de résistance électrique par rapport audit câble principal (2), qui sont reliés électriquement aux câbles principal et secondaire (2, 9); en cas de rupture d'un rouleau (103), la valeur (Vᵣ) détectée par les moyens de détection (10) étant inférieure à la valeur maximale (Vₘₐₓ) et correspondante à une longueur (Lₜ) d'une portion du câble principal (2) comprise entre lesdits moyens de détection et l'élément de contact (3) contre lequel ledit câble vient en butée, et
des moyens de traitement (11) adaptés pour comparer ladite valeur détectée (Vᵣ) à ladite valeur maximale (Vₘₐₓ) et, si une différence est détectée, pour désactiver lesdits moyens d'entraînement en rotation (105) de manière à arrêter l'avancement du convoyeur continu (100) et à limiter, voire éliminer, la formation de rebuts en cas de rupture d'un rouleau (103), lesdits moyens de traitement (10) comprenant des moyens de mémoire (13) qui contiennent ladite valeur caractéristique (V_{c}) du câble principal (2) et sont adaptés, si ladite valeur détectée (Vᵣ) est inférieure à ladite valeur maximale (Vₘₐₓ), à déterminer la longueur (Lₜ) de la portion du câble principal (2) qui correspond à ladite valeur détectée (Vᵣ) sur la base de ladite valeur caractéristique (V_{c}), lesdits moyens de mémoire (13) contenant également des premières données dimensionnelles relatives à la répartition desdits éléments de contact (3) le long dudit câble principal (2), et **en ce que** lesdits moyens de traitement (11) sont adaptés pour déterminer l'élément de contact (3) contre lequel ledit câble principal (2) est venu en butée à la suite de la rupture d'un rouleau (103) sur la base desdites premières données et de la longueur (Lₜ) de ladite portion de câble principal.

2. Le système (1) selon la revendication 1, **caractérisé en ce que** lesdits moyens de mémoire (13) contiennent également des deuxièmes données dimensionnelles relatives à la structure géométrique dudit convoyeur continu (100) et **en ce que** lesdits moyens de traitement (11) sont adaptés pour déterminer la position de l'élément de contact (3) contre lequel ledit câble principal (2) est venu buter à la suite de la rupture d'un rouleau (103) par rapport audit convoyeur continu (100) sur la base desdites deuxièmes données.

3. Le système (1) selon une ou plusieurs des revendications précédentes, **caractérisé en ce qu'**il comprend des moyens de signalisation (12) d'un dysfonctionnement qui sont associés fonctionnellement auxdits moyens de traitement (11) afin d'être activés lorsque ladite valeur détectée (Vᵣ) est inférieure à ladite valeur maximale (Vₘₐₓ).

4. Le système (1) selon l'une ou plusieurs des revendications précédentes, **caractérisé en ce que** chacun desdits éléments de contact (3) comprend une plaque métallique.

5. Le système (1) selon l'une ou plusieurs des revendications précédentes, **caractérisé en ce qu'**il comprend une pluralité de supports (4) réalisés en matériau isolant, dont chacun est associé à un élément de contact (3) respectif et peut être associé à la structure porteuse (101) dudit convoyeur continu (100).

6. Four à céramique (110) comprenant un convoyeur continu (100) utilisant des rouleaux (103), **caractérisé en ce qu'**il comprend un système (1) selon l'une ou plusieurs des revendications 1 à 5.

7. Séchoir pour céramique (120) comprenant un convoyeur continu (100) utilisant des rouleaux (103), **caractérisé en ce qu'**il comprend un système (1) selon l'une ou plusieurs des revendications 1 à 5.
